# EUROPÄISCHE PATENTANMELDUNG

(11) **EP 1 749 683 A2**
(43) Veröffentlichungstag der Anmeldung: **07.02.2007**
(21) Anmeldenummer: 06016434.0
(22) Anmeldetag: 07.08.2006
(51) Int. Cl.: B60J 1/08

(54) **Fenstermodul für einen Omnibus**

(30) Priorität: 06.08.2005 DE 102005037181
(71) Anmelder: MAN Nutzfahrzeuge Aktiengesellschaft, 80976 München (DE)
(72) Erfinder: Gülke, Norbert, Dr., 31139 Hildesheim (DE); Belling, Torsten, 38118 Braunschweig (DE); Steinhoff, Jörg, 38259 Salzgitter (DE)

(57) **Zusammenfassung**

Fenstereinheit für einen Omnibus (1), wobei die Fenstereinheit neben mehreren Einzelkomponenten zumindest eine Fensterscheibe (2) aufweist und einen Teil der Außenverkleidung des Omnibusses (1) bildet, wobei die Fenstereinheit als eigenständig handhabbares Fenstermodul (3) ausgebildet ist, das Fenstermodul (3) definierte äußere Abmessungen aufweist und wechselseitig über eine Vielzahl am Omnibus (1) ausgebildete und an verschiedenen Stellen angeordnete Modulöffnungen (4) im Fahrzeugrahmen des Omnibusses (1) lösbar montierbar ist. Damit wird eine Fenstereinheit für einen Omnibus (1) geschaffen, bei dem die Probleme des Standes der Technik vermieden werden und welche insbesondere auf eine schnelle und wirtschaftliche Weise bereitgestellt wird und an verschiedenen Seiten bzw. Stellen im Fahrzeugrahmen des Omnibusses (1) montierbar sind.

## Beschreibung

Die Erfindung betrifft eine Fenstereinheit für einen Omnibus, wobei die Fenstereinheit neben mehreren Einzelkomponenten zumindest eine Fensterscheibe aufweist und einen Teil der Außenverkleidung des Omnibusses bildet.

Fenstereinheiten sind bei Omnibussen allgemein bekannt, welche insbesondere für den Linienverkehr eingesetzt werden. Der Omnibus kann dabei als Solofahrzeug oder als Gelenkfahrzeug ausgeführt sein, wobei eine unterschiedliche Anzahl von Fenstereinheiten am Fahrzeug vorhanden sein kann. Dabei bilden die Fenstereinheiten Teile der Außenverkleidung, wobei ein wesentlicher Bestandteil der Fenstereinheit aus der Fensterscheibe gebildet ist. Unterhalb der Fensterscheibe befindet sich wie allgemein bekannt eine Außenwand, welche bis an die Unterkante des Fahrzeugs reichen kann. Die Fenstereinheiten sind gewöhnlich seitlich von der Fahrgastbestuhlung außen am Fahrzeug angeordnet, und können auf der Innenseite Elemente einer Innenverkleidung aufweisen. In Längsrichtung des Omnibusses sind die Fenstereinheiten von außen an den Fahrzeugrahmen nebeneinander angebracht, wobei zwischen den Fenstereinheiten Türeinheiten zum Ein- und Ausstieg angeordnet sein können.

Aus der DE 102 48 654 A1 ist ein Verfahren zum Herstellen einer Kraftfahrzeugkarosserie, insbesondere einer Omnibuskarosserie, mit einem Fahrzeugrahmen, einer mit dem Fahrzeugrahmen im Wesentlichen starr verbundenen Karosserieaußenhaut und wenigstens einem in die Karosserie integrierten Fahrzeugfenster bekannt. Die bei diesem Verfahren ausgeführten Schritte betreffen das Vorsehen eines Montagerahmens, das Befestigen des Fahrzeugfensters und/ oder eines Abschnitts der Karosserieaußenhaut an dem Montagerahmen und ein starres Verbinden des Montagerahmens mit dem Fahrzeugrahmen. Im Wesentlichen stellt die Erfindung darauf ab, dass Bestandteile der Karosserieaußenhaut fern vom Fahrzeugrahmen des Omnibusses vorgefertigt und dann zusammen mit dem Montagerahmen als Modul an den Fahrzeugrahmen des Omnibusses angebaut werden. Jedoch sind die außerhalb der Rohbaustruktur vorgefertigten Module der Karosserieaußenhaut örtlich an die Rohbaustruktur angepasst und damit in ihrer Position nicht veränderbar.

Die DE 198 60 557 C1 offenbart Innenausbaumodule für Reisezugwagen oder Reisebusse, wobei erfindungsgemäß ein Modul aus einem L-förmigen, vorgefertigten Segment besteht, wobei der längere L-Schenkel das Seitenwandverkleidungssystem und der kürzere L-Schenkel wenigstens anteilmäßig ein komplettes Fußbodensystem bildet. Hierdurch wird es möglich, durch die vorgefertigten Fenstereinheiten den Innenkorpus für einen Wagenkasten vorauszubauen und anschließend mit wenigen Arbeitsschritten am Fahrzeug selbst einzubauen.

Ein Problem bei einem Fahrzeugaufbau gemäß dem Stand der Technik entsteht jedoch dadurch, dass die Fenstereinheiten am jeweiligen Fahrzeugrahmenabschnitt des Omnibusses montiert werden und somit eine fest vorbestimmte konstruktive Gesamteinheit bilden. Dadurch ergibt sich nach der fest vorgegebenen Anordnung der Fenstereinheiten eine nicht mehr veränderbare Einheit aus dem Fahrzeugrahmen, den tragenden Fahrzeugkomponenten und den Fenstereinheiten. Ein Omnibus mit gemäß dem Stand der Technik vorgefertigten Fenstereinheiten kann nach Fertigstellung nicht nachträglich an geänderte Nutzungsbedingungen angepasst werden, wobei Fenster- und Türeinheiten eine feste Anordnung zueinander aufweisen. Beispielsweise kann der Omnibus nicht für einen Wechsel der Verkehrsrichtung angepasst werden, indem Tür- und Fenstereinheiten gegeneinander tauschbar sind, um für einen Einsatz im Rechtsverkehr die Türeinheiten auf der rechten Seite des Omnibusses vorzusehen und analog für den Linksverkehr auf der linken Seite des Omnibusses.

Es ist daher die Aufgabe der vorliegenden Erfindung, eine Fenstereinheit für einen Omnibus zu schaffen, bei der die Probleme des Standes der Technik vermieden werden und welche insbesondere auf eine schnelle und wirtschaftliche Weise bereitgestellt wird und an verschiedenen Seiten bzw. Stellen im Fahrzeugrahmen des Omnibusses montierbar sind.

Diese Aufgabe wird erfindungsgemäß durch eine Fenstereinheit für ein Nutzfahrzeug mit den Merkmalen des Patentanspruchs 1 gelöst. Vorteilhafte Weiterbildungen der Erfindung sind in den abhängigen Ansprüchen angegeben.

Die Erfindung schließt die technische Lehre ein, dass die Fenstereinheit als eigenständig handhabbares Fenstermodul ausgebildet ist, das Fenstermodul definierte äußere Abmessungen aufweist und wechselseitig über eine Vielzahl am Omnibus ausgebildeter und an verschiedenen Stellen angeordneter Modulöffnungen im Fahrzeugrahmen des Omnibusses lösbar montierbar ist.

Diese Lösung bietet den Vorteil, dass durch den modularen Aufbau eine Vormontage der Fenstermodule außerhalb des Omnibusses möglich ist und der Fahrzeugsrahmen unabhängig vom Verwendungszweck des Fahrzeugs als Reise- oder Linienbus und unabhängig von der Verkehrsrichtung wie Rechts- oder Linksverkehr gestaltet werden kann. Die definierten äußeren Abmessungen der Fenstermodule bieten eine Schnittstelle zu standardisierten Modulöffnungen im Fahrzeugrahmen, sodass mehrere Fenstermodule in beliebiger Anordnung im Fahrzeug eingebaut werden können. Da die standardisierte Schnittstelle gleichermaßen der Schnittstelle zwischen dem Fahrzeugrahmen und einer Türeinheit entspricht, kann ebenfalls die Einbauposition eines Fenstermoduls mit einer Türeinheit getauscht werden. Somit wird eine Flexibilität des Fahrzeugaufbaus geschaffen, welche es ermöglicht, den Omnibus auch nachträglich flexibel an die Nutzungsbedingungen wie der Verkehrsrichtung anzupassen, ohne Änderungen oder eine vorherige Bestimmung am Fahrzeugrahmen selbst vorzunehmen. Bei einer Betrachtung des hinteren Abschnittes des Omnibusses wird dieser Vorteil insbesondere deutlich, da im Fahrzeugabschnitt, in dem die hintere Türeinheit eingebaut ist, gegenüberliegend ein Fenstermodul angeordnet ist, was für einen Wechsel der Ein-Ausstiegsseite lediglich einen wechselseitigen Austausch der Türeinheit mit dem Fenstermodul erfordert. Auch die Anzahl der Türeinheiten kann bei einer Entnahme eines Fenstermoduls und dem Einsatz einer Türeinheit geändert werden, beispielsweise bei einer höheren erforderlichen Türanzahl, wenn der Omnibus ein schnelles Ein- und Aussteigen für Kurzfahrten ermöglichen muss, wie es beispielsweise bei einem Einsatz von Omnibussen auf Flughäfen bekannt ist. Voraussetzung für den nachträglichen beliebigen Aus- und Einbau des Fenstermoduls ist eine Lösbarkeit der Montageverbindung, um das Fenstermodul vom Fahrzeugrahmen zu trennen und neu zu montieren. Das Fenstermodul kann so ausgeführt sein, dass dieses mit allen montierten Einzelkomponenten nach einer vollständigen Inbetriebnahme mittels einer geeigneten Hebe- /Schiebevorrichtung in die jeweils gewählte Modulöffnung im Fahrzeugrahmen eingesetzt wird. Die Hebe- /Schiebevorrichtung wird erst nach erfolgter Verbindung des Fenstermoduls mit der Modulöffnung des Fahrzeugrahmens entfernt.

Vorteilhafterweise sind die äußeren Abmessungen des Fenstermoduls derart ausgebildet, dass dieses in einer standardisierten Modulöffnung des Fahrzeugrahmens einsetzbar ist, welche gleichermaßen zur Aufnahme eines Türmoduls ausgebildet ist. Die äußeren Abmessungen des Fenstermoduls betreffen dabei sowohl die Befestigungspunkte zur Verbindung des Fenstermoduls zum Fahrzeugrahmen, als auch die Außenkontur, welche entsprechende Übergänge der Außenverkleidung des Fenstermoduls zu den benachbarten Außenverkleidungen aufweist. Wie die Übergänge der Außenverkleidung sind auch an der Kontur der Innenseite des Fenstermoduls Übergänge zu den benachbarten Komponenten vorgesehen, wobei die benachbarten Komponenten in der Einbauposition im Fahrzeugrahmen ebenfalls aus einem Fenstermodul oder aus einem Türmodul gebildet sein können. Die Austauschbarkeit der Fenstermodule mit den Türmodulen erfordert für beide Komponenten sowohl standardisierte mechanische Befestigungsschnittstellen als auch entsprechende äußere Abmessungen, welche passgenaue Übergänge der Außen- und Innenkontur ermöglichen.

Nach einer möglichen Weiterbildung der Erfindung wird vorgeschlagen, dass das Fenstermodul einen Montagerahmen aufweist, wobei die Einzelkomponenten und die zumindest eine Fensterscheibe im Montagerahmen des Fenstermoduls außerhalb des Omnibusses montierbar sind und wobei die Einzelkomponenten und/oder die Fensterscheibe über mechanische Verbindungen und/ oder über Klebeverbindungen mit dem Montagerahmen zur Bildung des Fenstermoduls verbindbar sind. Der Montagerahmen bildet den Grundkörper des Fenstermoduls, an dem weitere Komponenten wie eine Fensterscheibe, die Außenverkleidung und eine Innenverkleidung befestigt werden, wobei diese Komponenten auch mehrteilig sein können. Diese und weitere Komponenten werden fern vom Omnibus zu einem einzeln handhabbaren, funktionsfertigen Fenstermodul montiert. Der Montagerahmen kann dabei mittels einer Transport- oder Haltevorrichtung in einer ergonomischen Position gehalten werden, um einen vereinfachten Zusammenbau der Fenstermodule zu ermöglichen. Die Komponenten können am Montagerahmen geklebt, geschraubt oder auf andere Weise form-, reib- oder stoffschlüssig verbunden werden. Damit ist auch eine nachträgliche Demontage wieder möglich, beispielsweise für eine endgültige Demontage des Fenstermoduls, zur Umrüstung auf ein anderes Fahrzeug oder eine andere Ausstattungsvariante. Auch Klebetechniken gestatten wie allgemein bekannt ein Lösen der Verbindung durch thermische oder chemische Einwirkung auf die Klebeverbindung, sodass hierdurch keine Einschränkung hinsichtlich der Demontierbarkeit der Komponenten vom Montagerahmen gesehen werden muss. Insbesondere Klebeverbindungen zeichnen sich durch vorteilhafte Eigenschaften für den Einsatz als Verbindungstechnik in dynamisch belasteten Bereichen wie einem Nutzfahrzeug dadurch aus, dass die Klebeverbindungen eine Dämpfungswirkung aufweisen, welche Geräusche wie ein Klappern oder ein Quietschen verhindern und sich im Betrieb nicht lockern oder lösen und darüber hinaus wartungsfrei sind. Weiterhin kann der Montagerahmen eine Vorrichtung aufweisen, welche ein Befestigen an eine geeignete Hebe- /Schiebevorrichtüng ermöglicht, um das Fenstermodul in die jeweils gewählte Modulöffnung im Fahrzeugrahmen einzusetzen, wobei die Hebe-/Schiebevorrichtung zugleich aus der Transport- oder Haltevorrichtung gebildet sein kann.

Eine Erweiterung des Vormontageumfangs des Fenstermoduls kann dadurch erzielt werden, indem das Fenstermodul eine Seitenklappe aufweist, wobei diese unterhalb der Fensterscheibe angeordnet ist und von der Außenseite des Omnibusses öffenbar ist. Die Seitenklappe ist dabei in der Außenverkleidung integriert, wobei diese je nach Art des Omnibusses innenliegende technische Elemente oder einen Stauraum verschließen kann. Die Seiteklappe kann von der Außenseite geöffnet werden, wobei ein Fenstermodul, welches eine Seitenklappe aufweist, an der Position im Fahrzeugrahmen eingesetzt wird, in dem die technischen Elemente angeordnet sind, sofern diese nicht ebenfalls im Fenstermodul integriert sind.

Vorteilhafterweise sind die Einzelkomponenten des Fenstermoduls vor dem Einbau in eine der standardisierten Modulöffnungen des Fahrzeugrahmens funktionsfertig vormontiert, um eine Vorprüfbarkeit der Funktionen des Fenstermoduls zu schaffen. Die Prüfung kann sich sowohl auf mechanische Komponenten wie die Funktion von Klapp- oder Schiebefenster beziehen oder auch elektrische Funktionskomponenten wie eine Beleuchtung oder elektrische Anschlüsse für diverse Verbraucher beziehen. Ebenfalls kann auf der Innenseite des Fenstermoduls an entsprechender Stelle eine Bestuhlung vormontiert sein, wobei das Fenstermodul einen L-Förmigen Querschnitt aufweist, und sowohl die Bestuhlung an zumindest einem Befestigungspunkt aufnimmt als auch einen Teil des Bodens des Fahrgastraumes bildet. Somit kann das Fenstermodul eine unbestimmte Anzahl von weiteren Komponenten aufweisen, welche an diesem vormontierbar sind.

Aus konstruktiven Gründen ist es von besonderem Vorteil, dass eine lösbare Befestigung des Fenstermoduls mit dem Fahrzeugrahmen mittels mechanischer Befestigungselemente erfolgt. Diese Befestigungselemente können als formschlüssige Verbindungen wie beispielsweise Schraubenverbindungen ausgeführt sein. Durch eine Lösbarkeit der Verbindung kann vorteilhafterweise bei einer späteren Veränderung des Omnibusses durch geänderte Nutzungsbedingungen wie der Verkehrsrichtung oder dem Einsatz eines anderen Fenstermoduls in einem anders genutzten Fahrzeug wie ein Linien- oder Reisebus das Fenstermodul demontiert werden und in einem anderen Fahrzeug weiterbetrieben werden bzw. das Fahrzeug mit einem anderen Modul ausgestattet werden. Die Demontage kann soweit vereinfacht werden, dass sogar zu Wartungs- oder Reparaturzwecken ein vorübergehender Ausbau sinnvoll ist.

Eine weitere vorteilhafte Möglichkeit der Verbindung des Fenstermoduls mit dem Fahrzeugrahmen kann erreicht werden, indem eine lösbare Befestigung des Fenstermoduls mit dem Fahrzeugrahmen mittels zumindest einer Klebeverbindung erfolgt. Damit können auch für die Fügeverbindung des Fenstermoduls mit dem Fahrzeug die Vorteile einer Klebeverbindung genutzt werden, wobei auch hier die Klebeverbindungen eine Dämpfungswirkung aufweisen, welche Geräusche wie ein Klappern oder ein Quietschen verhindern und sich im Betrieb nicht lockern oder lösen. Die entsprechenden Kontaktelemente des Türmoduls und des Buggerippes bzw. des Fahrzeugrahmens weisen dabei eine große Kontaktfläche auf, um eine ausreichende Festigkeit der Klebeverbindung zu erzielen.

Eine vorteilhafte Weiterbildung der Erfindung sieht vor, dass das Fenstermodul einen L-Förmigen Querschnitt mit einem horizontal verlaufenden Bodenschenkel und einem vertikal verlaufenden Seitenwandschenkel aufweist, wobei zumindest ein Teil der Bestuhlung am horizontal verlaufenden Bodenschenkel lösbar montierbar ist und/ oder zumindest ein Teil der Bestuhlung am vertikal verlaufenden Seitenwandschenkel lösbar montierbar ist. Damit kann wenigstens ein Teil der Bestuhlung bereits außerhalb des Omnibusses vormontiert werden, sodass die Integrationsdichte der Fenstermodule und damit die Vormontagetiefe weiter erhöht wird. Die Montage der Bestuhlung an einen der Schenkel des Fenstermoduls kann mittels verschiedener Verbindungsmittel wie beispielsweise eine Verschraubung erfolgen, wobei die Montage ebenfalls sowohl am Bodenschenkel als auch am Seitenwandschenkel erfolgen kann, um eine höhere Belastbarkeit der Montageverbindung zu erzielen. Der Bodenschenkel kann im eingebauten Zustand des Fenstermoduls zumindest einen Teil des Bodens im Fahrgastraum bilden, wobei in Abhängigkeit von der Breite des Omnibusses sowie der Länge des Bodenschenkels der Boden des Fahrgastraums vollständig aus den nebeneinander auf jeder Fahrzeugseite angeordneten Fenstermodulen gebildet werden kann. Eine Lösbarkeit der Verbindungsmittel gestattet eine Wieder- bzw. Weiterverwendung der Fenstermodule unabhängig von der Bestuhlung, da diese aus dem Fenstermodul demontierbar ist.

Nachfolgend wird eine vorteilhafte Ausführungsform der vorliegenden Erfindung zusammen mit der Beschreibung der Figuren näher dargestellt. Es zeigt:
- Fig. 1: eine schematische Darstellung eines Omnibusses mit mehreren Modulöffnungen;
- Fig. 2: eine Draufsicht eines vorderen Teils eines Omnibusses mit mehreren Modulöffnungen für den Einbau von Fenstermodulen;
- Fig. 3: eine Draufsicht eines hinteren Teils eines Omnibusses mit mehreren Modulöffnungen für den Einbau von Fenstermodulen;
- Fig. 4: eine Seitenansicht eines vorderen Teils eines Omnibusses mit eingesetzten Fenstermodulen und einem Fahrerarbeitsplatz, welcher auf der linken Frontseite des Fahrzeugs eingesetzt ist; und
- Fig. 5: eine Seitenansicht eines hintern Teils eines Omnibusses mit eingesetzten Fenstermodulen und einer eingesetzten Türeinheit.

Bei den Figuren handelt es sich lediglich um beispielhafte schematische Darstellungen.

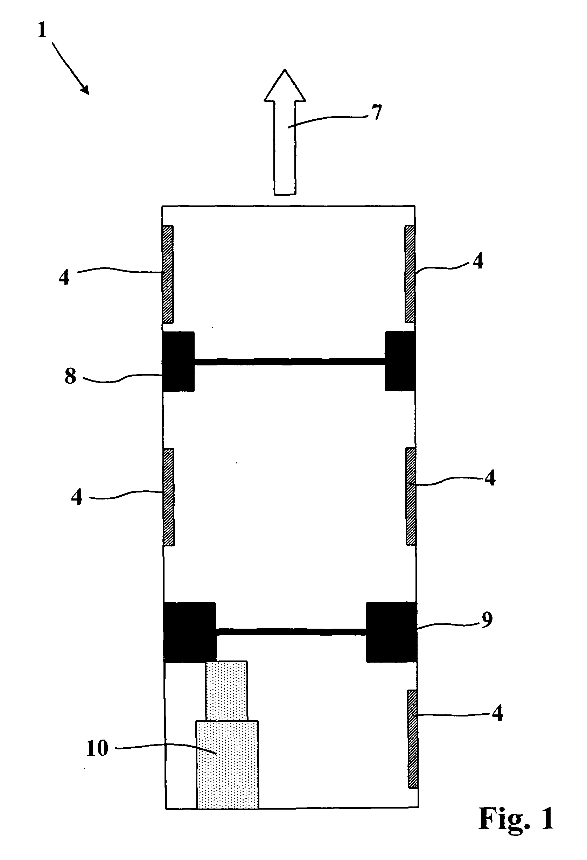

Fig. 1 zeigt eine Darstellung eines Omnibusses 1, wobei die Fahrtrichtung 7 durch einen Pfeil angedeutet ist. Der Omnibus 1 ist im dargestellten Ausführungsbeispiel ein Solofahrzeug mit einer Vorderachse 8 und einer Hinterachse 9, wobei mehrere Modulöffnungen 4 an der Außenseite des Omnibusses 1 dargestellt sind. Die Modulöffnungen 4 sind auf der rechten und linken Seite des Omnibusses 1 angeordnet, wobei die Modulöffnungen 4 in Fahrtrichtung 7 vor der Vorderachse 8, zwischen der Vorder- und der Hinterachse 8 und 9 sowie hinter der Hinterachse 9 angeordnet sind. Die Modulöffnung 4 vor der Vorderachse 8 ist in Fahrtrichtung 7 im Wesentlichen auf der Höhe des Fahrerarbeitsplatzes (nicht dargestellt) angeordnet, wobei die Modulöffnungen 4 im Mittelteil des Fahrzeuges auf einer gleichen Höhe in Bezug auf die Fahrtrichtung 7 dargestellt sind. Im hinteren Bereich des Omnibusses 1 wird bei einer Linkslenkervariante ein Fenstermodul, welches in einer Modulöffnung 4 auf der gleichen Höhe wie eine Türeinheit eingebaut ist, auf der linken Fahrzeugseite und bei einer Rechtslenkervariante auf der rechten Fahrzeugseite eingesetzt. Dabei sind die Fenstermodule nebeneinander in den Fahrzeugrahmen integriert, und bilden die Außenverkleidung des Omnibusses 1. Eine Motor-Getriebeeinheit 10 befindet sich im Heck des Omnibusses 1, und kann optional für die Links- oder die Rechtslenkervariante auf der rechten oder der linken Seite im Heck des Fahrzeugs angeordnet sein, wobei im vorliegenden Ausführungsbeispiel der linksseitige Einbau gezeigt ist.

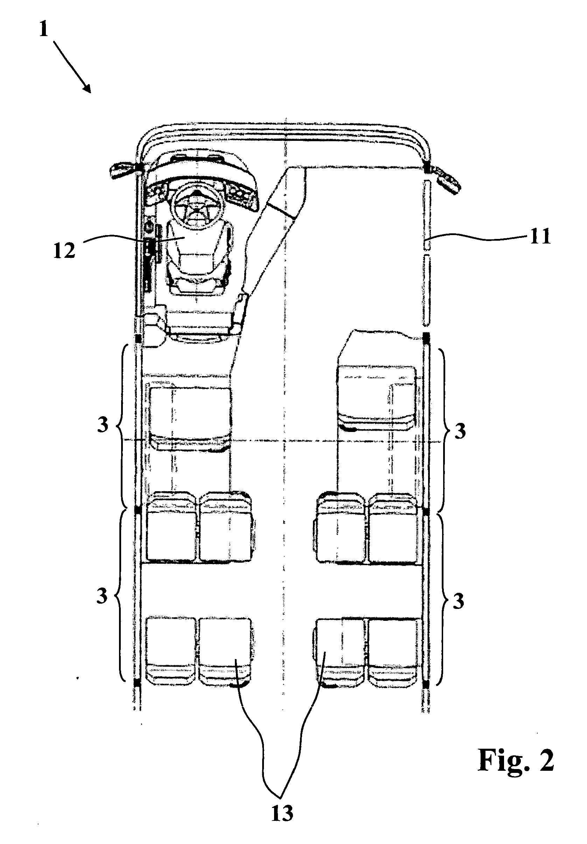

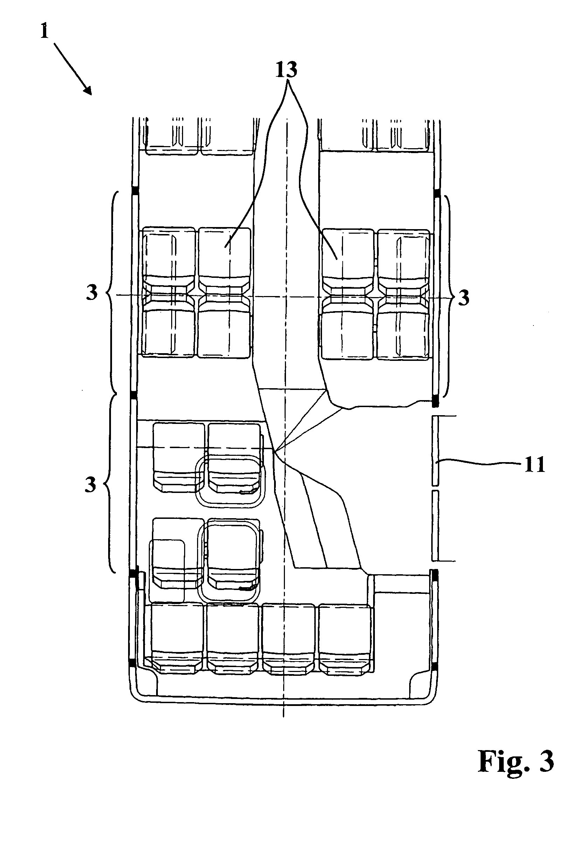

Die Fenstermodule 3 sind in Fig. 2 und Fig. 3 in einem eingebauten Zustand gezeigt, wobei Fig. 2 einen vorderen Abschnitt und Fig. 3 einen hinteren Abschnitt des Omnibusses 1 zeigt. Die Außenverkleidung des Omnibusses 1 wird im Wesentlichen aus den Fenstermodulen 3 und den Türeinheiten 11 gebildet, wobei in Fig. 2 im vorderen linken Bereich des Omnibusses 1 ein Fahrerarbeitsplatz 12 eingesetzt ist. Erkennbar ist die einheitliche Größe bzw. Breite der Fenstermodule 3 untereinander, wobei die Einbaumaße, d.h. insbesondere die Breite der Fenstermodule 3 ebenfalls mit den Einbaumaßen der Türeinheit 11 übereinstimmen. Im Fahrgastraum ist eine Bestuhlung 13 dargestellt, welche entsprechend der Anordnung von Fenstermodulen 3 und Türeinheiten 11 im Fahrgastraum angeordnet sind, sodass an der Stelle der Türeinheit 11 beispielsweise keine Bestuhlung 13 vorhanden ist.

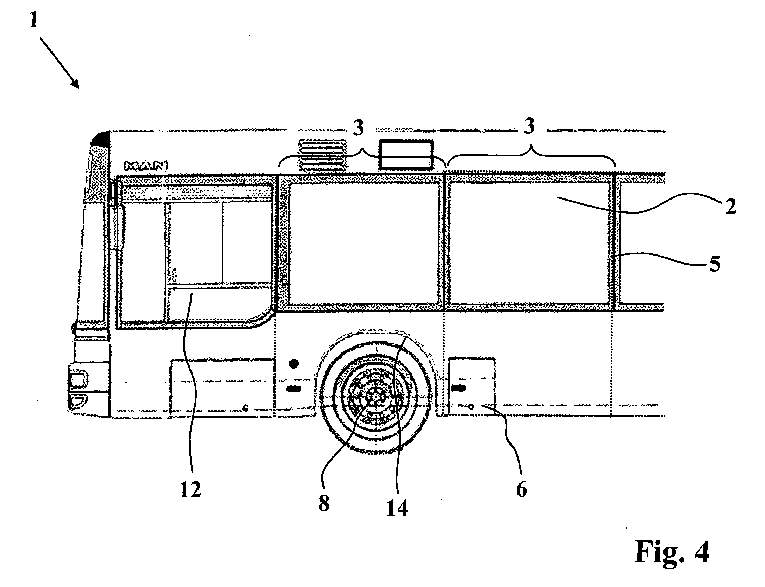

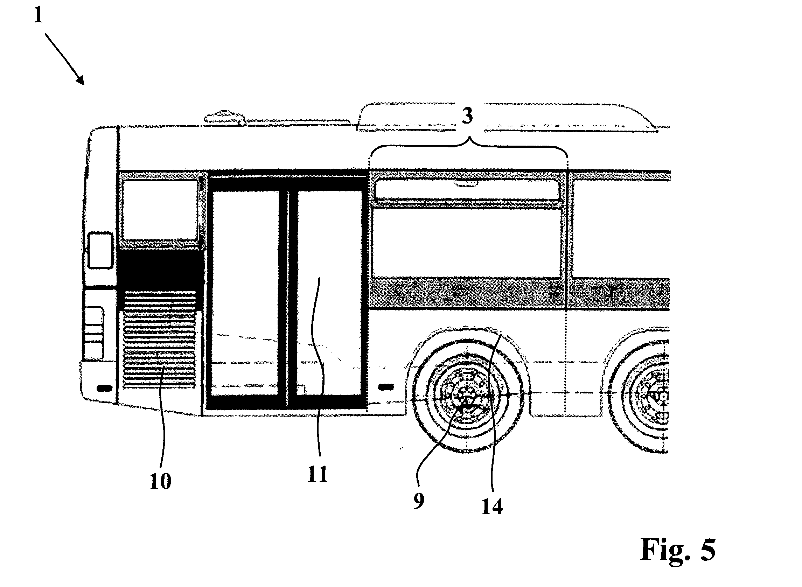

Eine Seitenansicht des Omnibusses 1 bieten die Figuren 4 und 5, wobei in Fig. 4 der vordere Bereich des Omnibusses 1 und in Fig. 5 der hintere Bereich gezeigt ist. Die Fenstermodule 3 bilden die Außenverkleidung des Omnibusses 1, wobei sich die einzelnen Fenstermodule 3 bis an die Fahrzeugunterkante erstrecken. In Fig. 4 ist die linke vordere Fahrzeugseite dargestellt, wobei im vorderen Bereich der Fahrerarbeitsplatz 12 eingesetzt ist und nachfolgend in Längsrichtung mehrere Fenstermodule 3 folgen. Das erste Fenstermodul 3, welches angrenzend an den Fahrerarbeitsplatz 12 eingesetzt ist, weist eine Radaussparung 14 für das Rad der Vorderachse 8 auf. An dem auf das ersten Fenstermodul 3 folgenden zweiten Fenstermodul 3 ist in der unteren Seitenverkleidung eine Seitenklappe 6 integriert, welche von der Außenseite geöffnet werden kann, wobei sich hinter der Seitenklappe 6 innenliegend beispielsweise Bedienelemente des Fahrzeugs befinden können. In Fig. 5 ist angrenzend an das Fenstermodul 3 eine Türeinheit 11 eingesetzt, welche als zweiflügelige Tür ausgeführt ist. Das vor der Türeinheit 11 angeordnete Fenstermodul 3 weist eine Radaussparung 14 für die Hinterachse 9 auf, wobei bei diesem Fenstermodul 3 die Fensterscheibe 2 zweiteilig aufgebaut ist, und der obere Teil der Fensterscheibe 2 geöffnet werden kann. Der Umriss der Fenstermodule 3 ist durch eine gestrichelte Linie dargestellt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- **1**: Omnibus
- **2**: Fensterscheibe
- **3**: Fenstermodul
- **4**: Modulöffnung
- **5**: Montagerahmen
- **6**: Seitenklappe
- **7**: Fahrtrichtung
- **8**: Vorderachse
- **9**: Hinterachse
- **10**: Motor-Getriebeeinheit
- **11**: Türeinheit
- **12**: Fahrerarbeitsplatz
- **13**: Bestuhlung
- **14**: Radaussparung

## Patentansprüche

1. Fenstereinheit für einen Omnibus (1), wobei die Fenstereinheit neben mehreren Einzelkomponenten zumindest eine Fensterscheibe (2) aufweist und einen Teil der Außenverkleidung des Omnibusses (1) bildet,
**dadurch gekennzeichnet, dass** die Fenstereinheit als eigenständig handhabbares Fenstermodul (3) ausgebildet ist, das Fenstermodul (3) definierte äußere Abmessungen aufweist und wechselseitig über eine Vielzahl am Omnibus (1) ausgebildete und an verschiedenen Stellen angeordnete Modulöffnungen (4) im Fahrzeugrahmen des Omnibusses (1) lösbar montierbar ist.

2. Fenstereinheit für einen Omnibus (1) nach Anspruch 1,
**dadurch gekennzeichnet, dass** die äußeren Abmessungen des Fenstermoduls (3) derart ausgebildet sind, dass dieses in einer standardisierten Modulöffnung (4) des Fahrzeugrahmens einsetzbar ist, welche gleichermaßen zur Aufnahme eines Türmoduls ausgebildet ist.

3. Fenstereinheit für einen Omnibus (1) nach Anspruch 1,
**dadurch gekennzeichnet, dass** das Fenstermodul (3) einen Montagerahmen (5) aufweist, wobei die Einzelkomponenten und die zumindest eine Fensterscheibe (2) im Montagerahmen (5) des Fenstermoduls (3) außerhalb des Omnibusses (1) montierbar sind.

4. Fenstereinheit für einen Omnibus (1) nach Anspruch 1,
**dadurch gekennzeichnet, dass** das Fenstermodul (3) eine Seitenklappe (6) aufweist, wobei diese unterhalb der Fensterscheibe (2) angeordnet ist und von der Außenseite des Omnibusses (1) öffenbar ist.

5. Fenstereinheit für einen Omnibus (1) nach zumindest einem der vorgenannten Ansprüche,
**dadurch gekennzeichnet, dass** die Einzelkomponenten und/ oder die Fensterscheibe (2) über mechanische Verbindungen und/ oder über Klebeverbindungen mit dem Montagerahmen (5) zur Bildung des Fenstermoduls (3) verbindbar sind.

6. Fenstereinheit für einen Omnibus (1) nach zumindest einem der vorgenanten Ansprüche,
**dadurch gekennzeichnet, dass** die Einzelkomponenten des Fenstermoduls (3) vor dem Einbau in eine der standardisierten Modulöffnungen (4) des Fahrzeugrahmens funktionsfertig vormontiert sind, um eine Vorprüfbarkeit der Funktionen des Fenstermoduls (3) zu schaffen.

7. Fenstereinheit für einen Omnibus (1) nach zumindest einem der vorgenanten Ansprüche,
**dadurch gekennzeichnet, dass** eine lösbare Befestigung des Fenstermoduls (3) mit dem Fahrzeugrahmen mittels mechanischer Befestigungselemente erfolgt.

8. Fenstereinheit für einen Omnibus (1) nach zumindest einem der vorgenanten Ansprüche,
**dadurch gekennzeichnet, dass** eine lösbare Befestigung des Fenstermoduls (3) mit dem Fahrzeugrahmen mittels zumindest einer Klebeverbindung erfolgt.

9. Fenstereinheit für einen Omnibus (1) nach zumindest einem der vorgenannten Ansprüche,
**dadurch gekennzeichnet, dass** das Fenstermodul (3) einen L- Förmigen Querschnitt mit einem horizontal verlaufenden Bodenschenkel und einem vertikal verlaufenden Seitenwandschenkel aufweist.

10. Fenstereinheit für einen Omnibus (1) nach Anspruch 9,
**dadurch gekennzeichnet, dass** zumindest ein Teil einer Bestuhlung (13) am vertikal verlaufenden Seitenwandschenkel oder am horizontal verlaufenden Bodenschenkel lösbar montiert ist.
